# EUROPEAN PATENT SPECIFICATION

(11) **EP 2 316 093 B1**
(45) Date of publication and mention of the grant of the patent: **23.03.2016**
(21) Application number: 08772852.3
(22) Date of filing: 26.06.2008
(51) Int. Cl.: H04W 12/08, H04L 29/06, H04L 9/32, H04W 4/02

(54) **SYSTEM, METHOD AND APPARATUS FOR SECURITY MANAGEMENT OF AN ELECTRONIC DEVICE**
SYSTEM, VERFAHREN UND VORRICHTUNG ZUR SICHERHEITSVERWALTUNG EINES ELEKTRONISCHEN GERÄTS
SYSTÈME, PROCÉDÉ ET APPAREIL DE GESTION DE SÉCURITÉ D'UN DISPOSITIF ÉLECTRONIQUE

(43) Date of publication of application: 04.05.2011
(73) Proprietor: Redknee Inc., Mississauga, ON L4W 4Y9 (CA)
(72) Inventor: ZABAWSKYJ, Bohdan, Woodbridge, Ontario L4L 9L8 (CA); STEELE, Philip, Mississauga ON L4W 4Y9 (CA); KUMAR, Vinay, Brampton, Ontario L6R 1G3 (CA); LAU, Anthony, Toronto, Ontario M9A 5G4 (CA)
(74) Representative: ABG Patentes, S.L.
(86) International application number: PCT/CA2008/001197
(87) International publication number: WO 2009/155681

(56) References cited:
- WO-A1-03/045099
- GB-A- 2 381 419
- US-A- 6 091 957
- US-A1- 2004 185 885
- US-A1- 2004 203 879
- US-A1- 2004 259 574
- US-A1- 2006 079 249
- US-B1- 6 377 810
- US-B1- 6 505 048
- US-B1- 6 687 504
- US-B2- 6 760 046
- US-B2- 7 353 533

## Description

### FIELD

The present specification relates generally to telecommunications and more particularly relates to a system, method and apparatus for security management of an electronic device.

### BACKGROUND

Complexity and features of electronic devices, particularly mobile electronic devices such as personal digital assistants incorporating wireless telephony, email and web-browsing functions, and the like, continue to advance. There is little sign of such advances plateauing. There is much activity relative to providing enhanced applications and services to these electronic devices. With provision of such enhanced applications comes the risk of malicious applications, including viruses and spyware.

Mobile devices also often store context information such as location information as well as other information that pertains to the identity of a given subscriber (for example, subscriber preferences such as preferred genres for content, identity information such as MSISDN or Uniform Resource Identifier addresses, billing and account information such as credit card information). This information may be explicitly input by the subscriber (for example, the subscriber may input his/her login information when accessing a given authorized application) or otherwise autonomously determined by applications resident within the device as the subscriber accesses a given authorized application (for example, the device may autonomously determine the location of the subscriber by using an embedded triangulation capability such as a the Global Positioning System). Problems can arise when malicious applications extract and forward subscriber or device information to an unauthorized server without the consent or knowledge of the subscriber.

Document GB2381419A describes a method in a communication system, communication system, a location service server and a user equipment for communication via a communication system.

Document WO03045099A1 describes a telecommunication system, a method for controlling the privacy of a user in a communication system, an entity for use in a telecommunication system and a home location register for use in a telecommunication system.

Document US 2006/079249 A1 describes a user privacy management apparatus and method on a Secure User Plane Location (SUPL) network including a SUPL Location Platform (SLP) and a SUPL Enabled Terminal (SET) and performing privacy authorization according to location of the SET.

### SUMMARY

A system, and a method for security management of an electronic device are provided. In one aspect, there is disclosed a system according to claim 1. The mobile electronic device is configured to send contextual data such as location data (such as address, country, region/area, city, building, floor, altitude, geotags, latitude/longitude) or information pertaining to the identity of the subscriber from the device and into a network attached to the mobile electronic device. The profile server is configured to authorize (or deny authorization) of location requests. The inspection point server is configured to intercept the location data being sent from the device and query the profile server to determine if the request was authorized.

Those skilled in the art will now recognize that other contextual data (for example, the subscribers call or session state (e.g. busy, available, on-line, current web-site visited) or information that pertains to the identity of a given subscriber (for example, subscriber preferences, identity information, billing and financial information) may be sent from the device and applicable to the foregoing system, method and apparatus. Those skilled in that art will now recognize that the teachings herein can be extended to intermediate and regulate other contextual information or information that pertains to the identity of a given subscriber in addition to location data.

In an embodiment, the security management system comprising a first computing module connectable to an electronic device. The first computing module is configured to receive an authorization request. The authorization request comprises a request for approval to send contextual data (such as location data or information pertaining to the identity of the subscriber) from the electronic device to a destination server. The first computing module is configured to access security management data. The first computing module is also configured to determine whether to generate authorization data that represents authorization of the request based on a comparison of the authorization request and the security management data. The system also comprises a second computing module connectable to the electronic device. The second computing module is configured to receive a delivery request from the electronic device to send contextual data such as location data or information pertaining to the identity of the subscriber to the destination server. The second computing module is configured to access the first computing module. The second computing module is configured to determine whether to send the location information based on a comparison of the delivery request and authorization data.

The first computing module can be implemented as a policy server.

The second computing module can be implemented as a inspection point server.

The first computing module and the second computing module can be implemented on a single server.

The security management data can comprise an identification of the electronic device or subscriber and destination server identification such that the authorization data is generated provided the destination server identification matches an identity of the destination server.

The security management data can further comprise additional settings such that the first computing module is configured to consider the additional settings when determining whether to generate the authorization data.

The additional settings can comprise privacy settings respective to the electronic device or subscriber.

The additional settings can comprise settings established by a carrier or service provider that provides network access to the electronic device.

The additional settings can comprise profile preferences pertaining to subscribers such as filters to allow/block information to/from subscribers under particular states (such as "busy", "work") and various granularities of location information (such as address, country, region/area, city, building, floor, altitude, geotags, latitude/longitude).

The additional settings can comprise settings established by the destination server.

Another aspect of the specification provides a method for security management according to claim 7.

The response to the request to generate the authorization data can be based on an examination of security management data that comprises an identification of the electronic device and destination server identification such that the authorization data is generated provided the destination server identification matches an identity of a destination for the contextual data such as location data or information pertaining to the identity of the subscriber from specified in the request to deliver.

### BRIEF DESCRIPTION OF THE DRAWINGS

Various embodiments will now be discussed, by way of example only, in relation to the attached Figures in which:
Figure 1 is a schematic representation of a security management system.
Figure 2 is a schematic representation of the electronic device of Figure 1.
Figure 3 shows a flow-chart depicting a method of generating security management data.
Figure 4 shows a flow-chart depicting a method of security management in an electronic device.
Figure 5 shows a flow-chart depicting another method of security management in an electronic device.

### DETAILED DESCRIPTION OF THE EMBODIMENTS

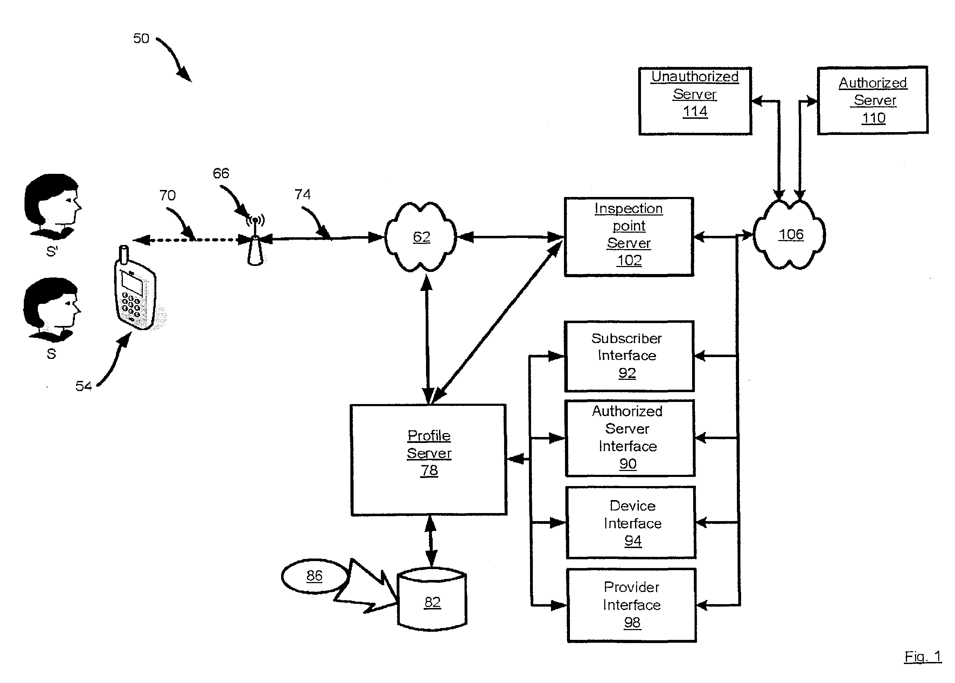

Referring now to Figure 1, a system for security management of an electronic device is indicated generally at 50. System 50 comprises an electronic device 54 that is connectable to a core mobile network 62 via a base station 66. In a present embodiment electronic device 54 is mobile such that a wireless link 70 is employed between electronic device 54 and base station 66. Any known backhaul link 74 is used between base station 66 and core mobile network 62. Electronic device 54 is associated with at least one subscriber S and can be based on any known or future-conceived mobile or nomadic communication equipment including, for example, a cellular telephone or a wireless personal digital assistant.

While the present embodiment contemplates a core mobile network 62 (for example, network technologies based on Global System for Mobile (GSM) communications, Code Division Multiple Access (CDMA), and the like), it is to be understood that in other embodiments other types of networks other than core mobile network technologies are contemplated, such as, for example, (e.g. the Internet or an Intranet connected to electronic device 54 via an Institute of Electrical and Electronic Engineers (IEEE) 802.11 connection or IEEE 802.16).

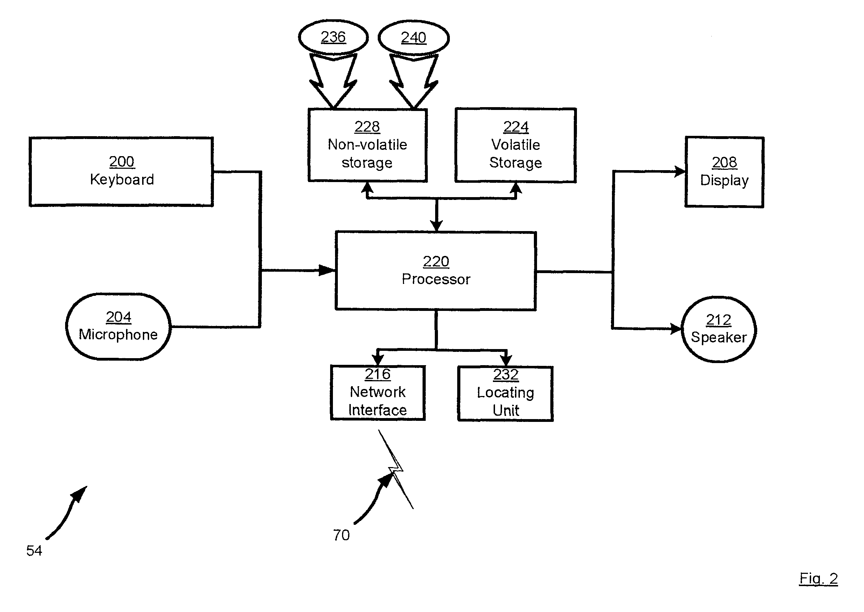

Referring briefly to Figure 2, electronic device 54 is shown in greater detail. Electronic device 54 in a present embodiment is based on the computing environment of a mobile wireless device that comprises the functionality of a cellular telephone, wireless email pager, web-browser and a personal digital assistant. Electronic device 54 thus includes a hardware configuration that comprises one or more input devices in the form of a keyboard 200, microphone 204 and the like; one or more output devices in the form of a display 208, a speaker 212 and the like; and a network interface 216, implemented in the form of a radio in the present embodiment. Network interface 216 is configured for conducting wireless communications over link 70. The foregoing components are interconnected by a microcomputer comprised of one or more central processing units 220 connected to volatile memory 224 (e.g. random access memory) and non-volatile memory 228 (e.g. FLASH memory).

Electronic device 54 also comprises a locating unit 232, which is implemented in a present embodiment in the form of a global positioning system (GPS) hardware chipset that communicates with the known network of GPS satellites and provides latitude and longitude coordinates of device 54 to processor 220. Locating unit 232 can be implemented in other ways. For example, in other embodiments, locating unit 232 can be implemented as software executable on processor 220, which communicates with network elements that are attached to the core mobile network 62 including a Gateway Mobile Location Centre (GMLC) (not shown) or Secure User Plane Location (SUPL) servers such as a SUPL Positioning Center (SPC) (not shown) or SUPL Location Center (SLC) (not shown). Such a GMLC and potentially other network elements are configured to determine the location of device 54 based on triangulation of device 54 in relation to a plurality of base stations, in addition to base station 66 that are in communication with radio network interface 216.

Electronic device 54, in the present exemplary embodiment, also comprises an authorized application 236 and an unauthorized application 240, which are maintained in non-volatile storage 228 and are executable on processor 220. Applications 236 and 240 will be discussed further below.
It should be understood that system 50 can be scaled to include a plurality of electronic devices 54.

Referring again to Figure 1, system 50 also comprises a profile server 78 that connects to core mobile network 62 and inspection point server 102. Note that profile server 78 can be based on an enhancement to the SPR (Subscriber Profile Repository) defined in the 3GPP Internet Protocol (IP) Multimedia Core Network Subsystem (IMS) standard.

Profile server 78 can be based on any suitable server computing environment. While not shown herein, it will be understood by those skilled in the art the server 62 includes a hardware configuration that may comprise one or more input devices in the form of a keyboard, a mouse and the like; one more output devices in the form of a display, and the like; a network interface for conducting network communications; all of which are interconnected by a microcomputer comprised of one or more central processing units that itself is connected to volatile memory and non-volatile memory. As will become apparent from the following discussions, the computing environment of profile server 78 will also comprise software processes that can be read from and maintained in non-volatile memory (or other computer readable media) that can be executed on the one or more central processing units.

Profile server 78 can also be configured to provide for a direct communication with an Inspection Point Server 102 to provide control and supplementary information for the purposes of the Inspection Point Server's function of traffic analysis. An example of this relationship may be found in the 3GPP standards for a Policy and Charging Rules Function (PCRF) in communication with a Policy and Charging Enforcement Function (PCEF), where the PCRF is Profile Server 78 and the PCEF is, encompassed by Inspection Point Server 102.

Profile server 78 also maintains a database 82 that can be maintained within the aforementioned computing environment or on a separate computing environment. Database 82 maintains security management data 86 respective to subscriber S or device 54, the details of which will be discussed in greater detail below.

Profile server 78 also maintains one or more interfaces, including, in a present embodiment, an authorized server interface 90, a subscriber interface 92, a device interface 94 and a provider interface 98, which are software applications that can be used to make certain changes to security management data 86 according various privileges associated with each interface 90, a subscriber interface 92, a device interface 94 and a provider interface 98. Each interface 90, 92, 94 and 98 and the privileges associated with each will be discussed further below.

System 50 also comprises an inspection point server 102 which is also connected to core mobile network 62. In turn, inspection point server 102 connects to a wide area network which in the present embodiment is the Internet 106. Internet 106 in turn is connected to at least one authorized server 110 and at least one unauthorized server 114. (Note that in other embodiments authorized server 110 and/or unauthorized server 114 can be directly connected to core mobile network 62 or Inspection point Server 102 instead of connected via Internet 106).

Both authorized server 110 and unauthorized server 114 represent computing devices that are capable of receiving and/or utilizing location data about device 54 as provided by locating unit 232. (In variations, authorized server 110 and unauthorized server 114 are capable of receiving other contextual data and/or information pertaining to the identity of the subscriber S that is stored in device 54). The identity of authorized server(s) 110 are maintained as part of security management data 86, and, as will be discussed in greater detail below, inspection point server 102 is configured to cooperate with device 54 and profile server 78 so that location data about device 54 (or other contextual data and/or information pertaining to the identity of the subscriber S that is stored in device 54) is permitted to be sent to authorized server 110, while location data about device 54 (or other contextual data and/or information pertaining to the identity of the subscriber S that is stored in device 54) is not permitted to be sent to unauthorized server 114.

It is to be understood that the features of profile server 78 can be incorporated into a policy decision point (PDP) server or Policy Charging Rules Function (PCRF) as contemplated in Request for Comments 3198 promulgated by the Internet Engineering Task Force (IETF) and found at http://www.ietf.org/rfc/rfc3198.txt (IETF 3198). The features of inspection point server 102 can also be incorporated into a General Packet Radio Service (GPRS) Gateway Support Node (GGSN), a Packet Data Serving Node (PDSN), and/or can be an independent deep packet inspection (DPI) node directly in the path of traffic, and/or can be incorporated into a Policy Enforcement Point (PEP) as discussed in IETF 3198 and 3GPP TS 23.203 Policy and charging control architecture, and/or indirectly managing traffic through communications with such a Policy Enforcement Point (PEP).

It is also to be understood that where inspection point server 102 is incorporated into a GGSN, PDSN, DPI node, PCEF, and/or a PEP, and where that inspection point server 102 requests the decision from profile server 78 as incorporated into a PDP, then profile server 78 can be configured with the same privacy rules that are also used for the call flow that are used when a GMLC (as incorporated into core mobile network 62) requests a privacy decision. An alternative design is that the inspection point server 102 (again as incorporated into a PEP) can be configured to request a policy decision from a Policy Charging Control Architecture (PCC) defined in the 3GPP standard TS23.203 and as incorporated into core mobile network 62. Of note, however, is that the TS23.203 standard does not provide any privacy capability today, so one, non-limiting, inventive aspect of the present specification is that a suitably modified PCC can proxy that policy request to a suitably modified policy server 78; that suitably modified policy server 78 can then continue with the same privacy decision processing in just the same way as if the GMLC requested a privacy decision. Alternatively, the inspection point server 102, as incorporated into a GGSN, PDSN, DPI node, and/or PEP, can be requested to provide a privacy decision or any other application/content server requested a privacy decision. Thus, another, non-limiting, inventive aspect of the present specification is that, where the GMLC is not in path of a location request then inspection point server 102 can still manage privacy through integration between the inspection point server 102 as incorporated into a GGSN, PDSN, DPI node, PCEF and/or PEP, and profile server 78.

Those skilled in the art will recognize that other subscribers (depicted as subscriber S' in Figure 1) may access services using device 54. Those skilled in the art will recognize that identifiers unique to the other subscribers (for example, a MSIDN or Uniform Resource Identifier) may be used to provide a differentiated level of authorized services on a subscriber by subscriber basis.

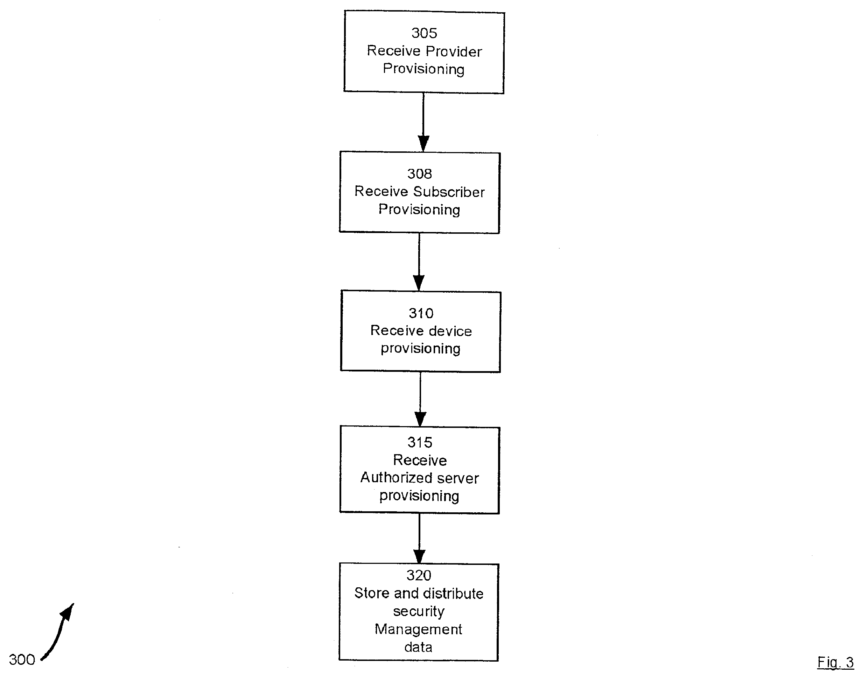

Referring now to Figure 3, a method of generating security management data is provided in the form of a flowchart and indicated generally at 300. Method 300 can be implemented on system 50 in order to create or update security management data 86, but it should be understood that variations to at least one of method 300 and system 50 are contemplated. (Variations to method 300 will become apparent from reviewing the following text, including the fact that that certain blocks can be omitted and/or performed in different sequences. For example, block 305 or block 308 can be omitted, or can be performed in parallel or in different orders, with appropriate modifications.)

Block 305 comprises receiving provider provisioning data. Block 305 can be implemented by way of a desktop computer or the like that connects to provider interface 98 via Internet 106 or in other suitable fashion. Such a desktop computer would typically be operated by a customer service representative of the carrier or service provider that hosts and otherwise administers the access of device 54 on core mobile network 62 (even if device 54 happens to be "roaming" and connected to core mobile network 62 via a base station 66 that is not controlled by that carrier or service provider). The provider provisioning data can typically comprises identifying information about subscriber S or device 54, such as one or more of the Mobile Systems International Subscriber Identity Number (MSISDN), International Mobile Equipment Identity (IMEI), and an indication of whether or not subscriber S or device 54 is permitted to access Internet 106 or servers attached to Internet 106. The provider provisioning data can also comprise the identity of authorized server 110 or the identity of unauthorized server 114.

Block 308 comprises receiving subscriber provisioning data. Block 308 can be implemented by way of a desktop computer or the like that connects to subscriber interface 92 via Internet 106 or in other suitable fashion. Block 308 can also be implemented by way of the device 54 where the device is connected to subscriber interface 92 via a number of messaging protocols (e.g. Short Message Service, Unstructured Supplementary Service Data) and IP protocols (e.g. Wireless Application Protocol, Session Initiation Protocol, Hypertext Transfer Protocol, and Extensible Markup Language). The subscriber S administers the access of device 54 on core mobile network 62 (even if device 54 happens to be "roaming" and connected to core mobile network 62 via a base station 66 that is not controlled by that carrier or service provider). The subscriber provisioning data can typically comprises identifying information about the subscriber S or device 54, such as one or more of the Mobile Systems International Subscriber Identity Number (MSISDN), International Mobile Equipment Identity (IMEI), and an indication of whether or not the subscriber S or device 54 authorizes the explicit or autonomous access or delivery of contextual data such as location data or information pertaining to the identity of the subscriber to the Internet 106 or servers attached to Internet 106. The subscriber provisioning data can also comprise the identity of authorized server 110 or the identity of unauthorized server 114. An authorized agent (not shown) may administer the access of device 54 on core mobile network 62 on behalf of a subscriber S. For example, a parent may administer the security access data on behalf of a child or a corporate administrator may administer the security access data on behalf of an employee.

Block 310 comprises receiving device provisioning data. Block 310 can also be implemented by way of a desktop computer or the like that connects to device interface 94 via Internet 106 or in other suitable fashion. Alternatively, or in addition, block 310 can be effected by a connection from device 54 to device interface 94, either via Internet 106 or via a direct connection (not shown) from device 54 via core mobile network 62 to device interface 94. However device interface 94 is accessed, such access would typically be effected by a subscriber that owns, operates or controls device 54. The device provisioning data can typically comprise the identity of authorized server 110 or the identity of unauthorized server 114, potentially overriding such identities if they have been provided as part of provider provisioning data at block 305. The device provisioning data can also comprise any specific privacy restrictions. Such privacy restrictions can include, for example, restricting time periods during which a server is identified as an authorized server, and then other time periods during which a serve is identified an unauthorized server.

Block 315 comprises receiving authorized server provisioning data. Block 315 can be implemented by way of a desktop computer or the like that connects to authorized server interface 90 via Internet 106 or in other suitable fashion. Such a desktop computer would typically be operated by a customer service representative or the like that hosts and otherwise administers authorized server 110. Block 315 can also be implemented via direct connection from authorized server 110 connecting to authorized server interface 90. Authorized server provisioning data can include, for example, digital certificates or other security tokens that can be used to verify the identity or authenticity of requests from authorized server 100.

The foregoing teachings relative to privacy restrictions can be supplemented by the teachings of Applicant's copending application PCT/CA2007/001570, "METHOD AND SYSTEM FOR ACTIVE PROFILE SERVER".

Block 320 comprises storing, managing, and distributing the security management data. Block 320 can be implemented by profile server 78 generating security management data 86 so as to contain the results of blocks 305, 308, 310 and 315, and to store security management data 86 on database 82. In turn, the security management data can be used to configure to affect the operation of the device 54, network elements in the core mobile network 62 (e.g. GMLC, SPC, or SLC), or Inspection Point Server 102. For example, the collective security management data can be used to update the settings of an anti-spyware application on the device 54, the settings of triangulation infrastructure attached to the core mobile network 62, or settings of the Inspection Point Server so that only traffic of interest results in a query to the Profile Server 78. Those skilled in the art will recognize that the dissemination of configuration data can be used to collectively reduce signalling and message traffic in the core mobile network 62 and between the inspection point server 102 and profile server 78. The dissemination of configuration data associated with security management data can be realized with a configuration mediation platform as described by the teachings of Applicant's copending application PCT/CA2008/000491, "CONFIGURATOR". Those skilled in the art will recognize that a number of protocols and interfaces can be used to disseminate configuration data into the device 54, network elements in the core mobile network 62 (e.g. GMLC, SPC, or SLC), or Inspection Point Server 102 including Application Programming Interfaces (API) based on CORBA (Common Object Request Broker Architecture) or SOAP/XML (Simple Object Access Protocol/Extensible Markup Language).

It should be understood that all or part of method 300 can be re-performed in order to provide updates or modifications to security management data 86. It should also be understood that security management data 86 can be generated and stored using other methodologies other than method 300. Of note is that not all blocks of method 300 need be performed in order to generate security management data 86.

As a general, simplified example, Table I shows exemplary contents of security management data 86, which can be generated by method 300 or other means.

**TABLE I**

| **EXAMPLE CONTENTS OF SECURITY MANAGEMENT DATA 86** | |
|---|---|
| **Field Name** | **Contents** |
| Device or subscriber Identification | One or more unique identifiers for Device 54 or subscriber S |
| Authorized Server Identification | One or more unique identifiers for Server 110 |

Table I contains two fields; Device Identification and Authorized Server Identification. The contents of device identification field provide at least one unique identifier (e.g. IMEI, IMSI, MSISDN, Uniform Resource Identifier (URI) (e.g. John.Doe@network_operator.com)) for device 54 or subscriber S. The contents of the authorized server identification field provide at least one unique identifier (e.g. Internet Protocol address, Media Access Control (MAC) Identifier, digital certificate, Uniform Resource Identifier (URI) (e.g. Social_nework_application@generic_network.com)) for authorized server 110. Additional fields can be added to Table I to provide further security management data as desired.

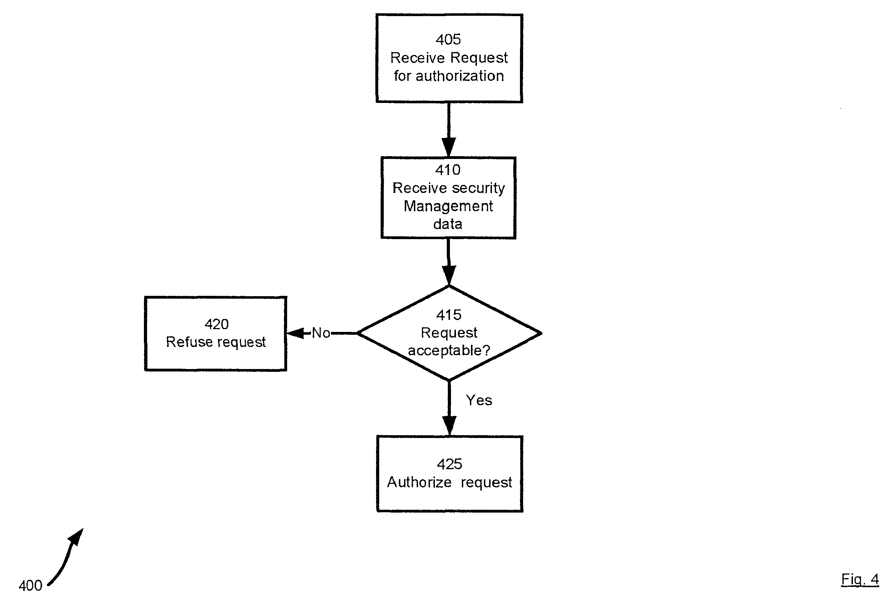

Referring now to Figure 4, a method of security management in an electronic device is provided in the form of a flowchart and indicated generally at 400. Method 400 can be implemented on system 50, and is typically performed by profile server 78. Method 400 can utilize security management data 86 that is generated by method 300 or other means. It should be understood that variations to at least one of method 400 and system 50 are contemplated.

Block 405 comprises receiving a location request authorization. In system 50, the location request is received by profile server 78. The location request itself can be generated by authorized application 236 or unauthorized application 240 executing on device 54, introduced earlier in reference to Figure 2. In another embodiment, contextual data such as location data can be generated by authorized application 236 or unauthorized application 240 executing on device 54, introduced earlier in reference to Figure 2. To the extent that the location or other contextual information is embedded in the data traffic and routed via the mobile core network 62 and inspection point server 102, the inspection point server 102 will recognize that contextual data such as location data information is being directed to an external server and formulate a location request authorization that will be directed to profile server 78. Those skilled in the art will now recognize that there are a variety of methods for defining and recognizing device, application and subscriber centric data flows of interest via the inspection point server 102 per parametric information that is inherent in the flow of data. In addition to the utilization of explicit addressing, subscriber, device, or application information inherent in the data flow or conveyed from external network elements or application servers, the policy enforcement point may recognize patterns or characteristic traffic flows as indicative 'signatures' that are associated with a given subscriber, device, service or application. Accordingly, the inspection point server 102 will determine that the data flow contains contextual data and generated a query to the profile server 78.

Those skilled in the art will now recognize that a number of protocols and interfaces can be used to query the profile server 78 including RADIUS (Remote Authentication Dial In User Service), DIAMETER, Session Initiation Protocol (SIP) as well as Application Programming Interfaces (API) based on CORBA (Common Object Request Broker Architecture) or SOAP/XML (Simple Object Access Protocol/Extensible Markup Language).

Both applications 236 and 240 include the functionality of obtaining location data corresponding to the location of device 54 via locating unit 232 and placing that location data in volatile storage 224 for usage by processor 220. Those skilled in the art will now recognize that applications 236 and 240 can also access other contextual data as well as information pertaining to the identity of the subscriber S that is stored in device 54. Likewise, both applications 236 and 240 also include the functionality of sending that location data or other contextual data as well as information pertaining to the identity of the subscriber S that is stored in device 54 over link 70 via network interface 216. More specifically, authorized application 236 is configured to attempt to deliver the location data to authorized server 110 or unauthorized server 114, while unauthorized application 240 is configured to attempt to deliver the location data to unauthorized server 114.

It should now be understood that authorized application 236 is defined, for purposes of explaining these embodiments, as "authorized" because security management data 86 as defined in Table I indicates that server 110 is "authorized". By the same token, it should now be understood that unauthorized application 240 is defined, for purposes of explaining these embodiments, as "unauthorized" because security management data 86 as defined in Table I includes ***no*** express indication that server 114 is "authorized", and therefore server 114 is deemed to be "unauthorized". Table I could be structured so as to include an express list of "unauthorized" application as well.

Block 410 comprises receiving security management data. Block 410 is performed by profile server 78 accessing database 82 to read security management data 86 therefrom.

Block 415 comprises determining if the request at block 405 is acceptable. Block 415 can be implemented by profile server 78 utilizing programming logic to compare the contents of the request from block 405 with the contents of security management data 86. Thus, if the request at block 405 was generated by unauthorized application 240, then the determination at block 415 will be "no", the request at block 405 is not acceptable and the request will be refused. In an embodiment where the contextual data is embedded in the data traffic, the profile server 78 will send a response to the inspection point server 102 indicating that the location request was not authorized. In turn, the inspection point server 102 will not allow the data traffic containing the contextual data to be forwarded to the authorized server 110. A notification (not shown) may be communicated to the device, subscriber, or authorized agent describing details pertaining to the unauthorized access attempt (for example, the address and service information associated with the unauthorized server). The notification may be sent via a variety of well known messaging systems including but not limited to Short Message Service (SMS), Multi-Media Message Service (MMS), or e-mail.

If, however, the request at block 405 was generated by authorized application 236, then the determination at block 415 will be "yes", the request at block 405 is acceptable and the request will be authorized. In an embodiment where the contextual data is embedded in the data traffic, the profile server 78 will send a response to the inspection point server 102 indicating that the location request was authorized. In turn, the inspection point server 102 will allow the data traffic containing the contextual data to be forwarded to the authorized server 110.

As part of the performance of block 420 or block 425, a log-file can be created for subsequent usage. For example, logs of refused requests can be generated at block 420 and sent to device 54, or other locations, to indicate that unauthorized requests have been made. In the event that unauthorized application 240 is mal-ware, a virus, or spyware, then the reports generated as part of block 420 can be used to trigger or suggest the removal of application 240 from device 54. It should be understood, however, that in many circumstances unauthorized application 240 would not likely send the request received at block 405 and would in fact simply attempt to send the location data of device 54 directly to unauthorized server 114. However, as will become apparent from the discussion below, regardless of whether unauthorized application 240 invokes method 400, the attempt to send location data from device 54 to unauthorized server 114 can be blocked using the teachings herein. Indeed, as another example of potential uses for log files, logs of accepted requests generated at block 425 can be used by inspection point server 102.

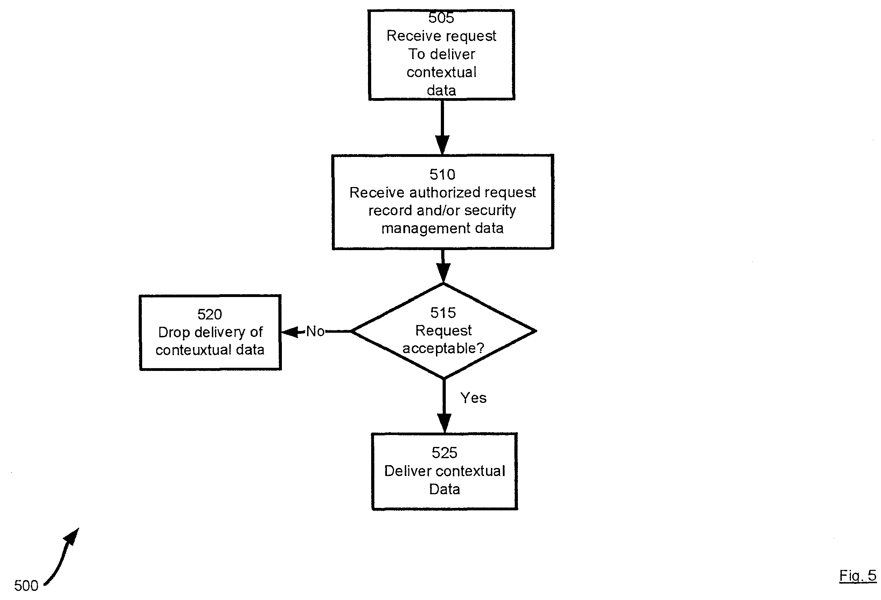

Referring now to Figure 5, a method of security management in an electronic device is provided in the form of a flowchart and indicated generally at 500. Method 500 can be implemented on system 50, and is typically performed by inspection point server 102. Method 500 can utilize results of performance (e.g. logs) generated by method 400 or other means. It should be understood that variations to at least one of method 500 and system 50 are contemplated.

Block 505 comprises receiving a request to deliver location data. In system 50, the request to deliver location data is received by inspection point server 102. The request itself can be generated by authorized application 236 or unauthorized location application 240 executing on device 54, introduced earlier in reference to Figure 2. In another embodiment, contextual data such as location data can be generated by authorized application 236 or unauthorized application 240 executing on device 54, introduced earlier in reference to Figure 2. To the extent that the location or other contextual information is routed via the mobile core network 62 and inspection point server 102, the inspection point server 102 will recognize that contextual data such as location data information is being directed to an external server. Those skilled in the art will now recognize that there are a variety of methods for defining and recognizing device, application and subscriber centric data flows of interest via the inspection point server 102 per parametric information that is inherent in the flow of data. In addition to the utilization of explicit addressing, subscriber, device, or application information inherent in the data flow or conveyed from external network elements or application servers, the policy enforcement point may recognize patterns or characteristic traffic flows as indicative 'signatures' that are associated with a given subscriber, device, service or application. Accordingly, the inspection point server 102 will determine that the data flow contains contextual data of interest.

As discussed above, in specific configurations both applications 236 and 240 include the functionality of obtaining location data corresponding to the location of device 54 via locating unit 232 and placing that location data in volatile storage 224 for usage by processor 220. Likewise, both applications 236 and 240 also include the functionality of sending that location data over link 70 via network interface 216. Recall again that, authorized application 236 is configured to attempt to deliver the location data to authorized server 110 or unauthorized server 114, while unauthorized application 240 is configured to attempt to deliver the location data to unauthorized server 114.

Block 510 comprises receiving authorized request record and/or retrieving security management data. Block 510 is implemented by inspection point server 102 querying profile server 78 to obtain security management data and/or to ascertain whether a previous performance of method 500 resulted in an authorization to provide location information. Block 510 can be effected by accessing a log generated by block 420 or block 425 of method 400, for examination as to whether previous location requests were authorized. Those skilled in the art will recognize that a number of protocols and interfaces can be used to query the profile server 78 including RADIUS, DIAMETER, SIP as well as API based on CORBA or SOAP/XML.

Block 515 comprises determining if the request at block 505 is acceptable. Block 515 can be implemented by inspection point server 102 utilizing programming logic to compare the contents of the request from block 505 with the contents of the log and/or other security management data obtained at block 510. In one embodiment, if the request at block 505 was generated by unauthorized location application 240, whereby location data is requested to be delivered to unauthorized server 114, then the determination at block 415 will be "no", delivery is not authorized, as there will have been no authorizations for such delivery generated during previous performances of block 425. As a result, at block 520, the delivery of the location data will be dropped. In another embodiment, the security management data retrieved by querying profile server 78 indicates that that the location request at block 505 is associated with an unauthorized server 114. As a result, at block 520, the delivery of the location data will be dropped. In a given embodiment, a notification (not shown) may be communicated to the device, subscriber, or authorized agent describing details pertaining to the unauthorized access attempt (for example, the address and service information associated with the unauthorized server). The notification may be sent via a variety of well known messaging systems including but not limited to Short Message Service (SMS), Multi-Media Message Service (MMS), or e-mail.

If, however, the request at block 505 was generated by authorized application 236, (for example, if a previous performance of block 425 indicated that such a location request is authorized or if the security management data retrieved by querying profile server 78 indicates that the location request at block 505 is associated with an authorized server110), then the determination at block 515 will be "yes", the request at block 505 is acceptable. Method 500 will then advance to block 525 at which point the location data received at block 505 will be forwarded to authorized server 110.

It should now be understood that authorized application 236, working in conjunction with authorized server 114, can be directed to a wide variety of applications. For example, in the location context, assume that authorized server 114 hosts an airline reservation system that is accessible to a web-browser executing on device 54. In this example, location application 236 can be configured to send location data about subscriber S or device 54 so that the airline reservation system can default to propose flight departure information relative to the location of subscriber S or device 54. As another example, assume that authorized server 114 hosts a weather information service that is accessible to a web-browser executing on device 54, then application 236 can be configured to send location data about subscriber S or device 54 so that the weather information service can default to provide weather information relative to the location of subscriber S or device 54. Many other types of applications that can be hosted by authorized server 114 will now occur to those skilled in the art, and indeed future applications will no doubt be conceived, However, since the location data of device 54 (or other types of data as discussed above) can be used for malicious purposes, or purposes that are unauthorized or beyond the privacy preferences of the operator of device 54, then the teachings herein can be used so that authorized location requests are permitted while unauthorized location requests are blocked.

## Claims

1. A security management system (50) comprising:
an inspection point server and a policy server connected via a network, each of said inspection point server and said policy server connectable to an electronic device (54) via said network;
said inspection point server (102) configured to receive, from said electronic device, a request (505) to send contextual data pertaining to the identity of a subscriber (S, S') to a destination server (110, 114);
said inspection point server (102) configured, in response to receiving said request, to transmit an authorization request (405) to said policy server (78), said authorization request (405) comprising a request for approval to send said contextual data from said electronic device (54) to said destination server (110, 114);
said policy server (78) configured to receive (405) said authorization request (405), to access security management data (86), and to determine whether to approve or deny said authorization request (405) based on a comparison of said authorization request (405) and said security management data (86);
said policy server (78) configured to send a response (420, 425) to said inspection point server indicating whether said authorization request (405) is approved or denied;
said inspection point server (102) configured to receive said response to said authorization request (405), to send (525) said contextual data if said response indicates approval, and to prevent delivery (520) of said contextual data if said response indicates denial.

2. The system (50) of claim 1 wherein said contextual data includes location data, a call state, or a session state, or information pertaining to the identity of at least one subscriber (S, S') and/or profile data.

3. The system (50) of claim 2 wherein information that pertains to the identity of a given subscriber (S, S') includes subscriber preferences, identify information, billing information, account information.

4. The system (50) of claim 1 wherein security management data (86) comprises an identification of said electronic device (54) and a destination server identification such that said authorization request is approved if said destination server identification matches an identity of said destination server (110,114).

5. The system (50) of claim 4 wherein said security management data (86) further comprises additional settings such that said policy server (78) is configured to consider said additional settings when determining whether to approve said authorization request.

6. The system (50) of claim 5 wherein said additional settings comprise privacy settings respective to said electronic device or subscriber; and/or
wherein said additional settings comprise settings established by at least one of a carrier or service provider that provides network access to said electronic device (54), and said destination server (110, 114).

7. A method (400, 500) for security management comprising:
receiving (505), at an inspection point server (102) from an electronic device (54) connectable to said inspection point server (102), a request to deliver contextual data pertaining to the identity of a subscriber (S, S') to a destination server (110, 114);
transmitting an authorization request (405) from said inspection point server (102) to a policy server (78), said authorization request (405) comprising a request for approval to send said contextual data from said electronic device (54) to said destination server (110, 114)
receiving (405), at the policy server (78), said authorization request;
accessing (410) security management data (86) at said policy server (78);
determining (415) whether to approve or deny said authorization request (405) based on a comparison of said authorization request (405) and said security management data;
sending (420, 425) a response to said inspection point server (102) indicating whether said authorization request (405) is approved or denied; and
receiving said response to said authorization request (405) at said inspection point server (102), sending said contextual data (525) if said response indicates approval, and preventing delivery of said contextual data (520) if said response indicates denial.

8. The method (400, 500) of claim 7 wherein said contextual data includes location data, a call state, or a session state, or information pertaining to the identity of at least one subscriber (S, S') and/or profile data.

9. The method (400, 500) of claim 8 wherein information that pertains to the identity of a given subscriber (S, S') includes subscriber preferences, identify information, billing information, account information.

10. The method (400, 500) of claim 7 wherein said security management data (86) comprises an identification of said electronic device (54) or subscriber (S, S') and a destination server identification such, that said authorization request is approved if said destination server identification matches an identity of said destination server (110, 114).

11. The method (400, 500) of claim 10 wherein said security management data (86) further comprises additional settings such that said policy server (78) is configured to consider said additional settings when determining whether to approve or deny said authorization request.

12. The method (400, 500) of claim 11 wherein said additional settings comprise privacy settings respective to said electronic device or subscriber; and/or
wherein said additional settings comprise settings established by at least one of a carrier or service provider that provides network access to said electronic device (54), and said destination server (110, 114).

## Patentansprüche

1. Sicherheitsverwaltungssystem (50), umfassend:
einen Inspektionspunktserver und einen Richtlinienserver, die über ein Netzwerk verbunden sind, wobei sowohl der Inspektionspunktserver als auch der Richtlinienserver mit einer elektronischen Einrichtung (54) über das Netzwerk verbindbar sind;
wobei der Inspektionspunktserver (102) konfiguriert ist, von der elektronischen Einrichtung, eine Anforderung (505) zum Senden von Kontextdaten an einen Zielserver (110, 114) zu erhalten, die der Identität eines Subskribenten (S, S') angehören;
wobei der Inspektionspunktserver (102) konfiguriert ist, als Antwort auf Erhalten der Anforderung eine Autorisierungsanforderung (405) an den Richtlinienserver (78) zu senden, wobei die Autorisierungsanforderung (405) eine Anforderung zur Bestätigung zum Senden der Kontextdaten von der elektronischen Einrichtung (54) an den Zielserver (110, 114) umfasst;
wobei der Richtlinienserver (78) konfiguriert ist, die Autorisierungsanforderung (405) zu erhalten (405), auf Sicherheitsverwaltungsdaten (86) zuzugreifen und anhand eines Vergleichs der Autorisierungsanforderung (405) und der Sicherheitsverwaltungsdaten (86) zu bestimmen, ob die Autorisierungsanforderung (405) bestätigt oder abgelehnt wird;
wobei der Richtlinienserver (78) konfiguriert ist, eine Antwort (420, 425) an den Inspektionspunktserver zu senden, die angibt, ob die Autorisierungsanforderung (405) bestätigt oder abgelehnt wird;
wobei der Inspektionspunktserver (102) konfiguriert ist, die Antwort auf die Autorisierungsanforderung (405) zu erhalten, die Kontextdaten zu senden (525), falls die Antwort eine Bestätigung angibt, und Auslieferung (520) der Kontextdaten zu verhindern, falls die Antwort Ablehnung angibt.

2. System (50) nach Anspruch 1, wobei die Kontextdaten Ortsdaten, einen Aufrufzustand oder einen Sitzungszustand oder Information enthält, die der Identität des wenigstens einen Subskribenten (S. S') und/oder Profildaten angehört.

3. System (50) nach Anspruch 2, wobei Information, die der Identität eines gegebenen Subskribenten (S, S') angehört, Subskribentenpräferenzen, Identitätsinformation, Rechnungsinformation, Buchhaltungsinformation enthält.

4. System (50) nach Anspruch 1, wobei die Sicherheitsverwaltungsdaten (86) eine Identifizierung der elektronischen Einrichtung (54) und eine Zielserveridentifizierung umfassen, so dass die Autorisierungsanforderung bestätigt wird, falls die Zielserveridentifizierung mit einer Identität des Zielservers (110, 114) übereinstimmt.

5. System (50) nach Anspruch 4, wobei die Sicherheitsverwaltungsdaten (86) ferner zusätzliche Einstellungen umfassen, so dass der Richtlinienserver (78) konfiguriert ist, zusätzliche Einstellungen zu berücksichtigen beim Bestimmen, ob die Autorisierungsanforderung bestätigt wird.

6. System (50) nach Anspruch 5, wobei die zusätzlichen Einstellungen private Einstellungen bezüglich der elektronischen Einrichtung oder Subskribenten umfassen; und/oder
wobei die zusätzlichen Einstellungen Einstellungen umfassen, die durch wenigstens ein Übertragungsmedium oder einen Diensteanbieter eingerichtet sind, Netzwerkzugriff auf die elektronische Einrichtung (54) und den Zielserver (110, 114) bereitzustellen.

7. Verfahren (400, 500) zur Sicherheitsverwaltung, umfassend:
an einem Inspektionspunkteserver (102), Erhalten (505) einer Anforderung zum Ausliefern von Kontextdaten, die der Identität eines Subskribenten (S, S') angehören, an einen Zielserver (110, 114) von einer elektronischen Einrichtung (54), die mit dem Inspektionspunktserver (102) verbindbar ist;
Senden einer Autorisierungsanforderung (405) von dem Inspektionspunktserver (102) an einen Richtlinienserver (78), wobei die Autorisierungsanforderung (405) eine Bestätigungsanforderung umfasst, um die Kontextdaten von der elektronischen Einrichtung (54) an den Zielserver (110, 114) zu senden;
Erhalten (405), an dem Richtlinienserver (78), der Autorisierungsanforderung;
Zugreifen (410) auf Sicherheitsverwaltungsdaten (86) an dem Richtlinienserver (78);
Bestimmen (415) anhand eines Vergleichs der Autorisierungsanforderung (405) und der Sicherheitsverwaltungsdaten, ob die Autorisierungsanforderung (405) bestätigt oder abgelehnt wird;
Senden (420, 425) einer Anforderung an den Inspektionspunktserver (102), die angibt, ob die Autorisierungsanforderung (405) bestätigt oder abgelehnt wird;
Erhalten der Antwort auf die Autorisierungsanforderung (405) an dem Inspektionspunktserver (102), Senden der Kontextdaten (525), falls die Antwort Bestätigung angibt, und Verhindern einer Auslieferung der Kontextdaten (520), falls die Antwort Ablehnung angibt.

8. Verfahren (400, 500) nach Anspruch 7, wobei die Kontextdaten Ortsdaten, einen Aufrufzustand oder einen Sitzungszustand oder Information enthalten, die der Identität wenigstens eines Subskribenten (S, S') und/oder Profildaten angehört.

9. Verfahren (400, 500) nach Anspruch 8, wobei Information, die der Identität eines gegebenen Subskribenten (S, S') angehört, Subskribentenpräferenzen, Identitätsinformation, Rechnungsinformation, Buchhaltungsinformation enthält.

10. Verfahren (400, 500) nach Anspruch 7, wobei die Sicherheitsverwaltungsdaten (86) ferner eine Identifizierung der elektronischen Einrichtung (54) oder Subskribenten (S, S') und eine Destinationsserveridentifizierung umfassen, so dass die Autorisierungsanforderung bestätigt wird, falls die Destinationsserveridentifizierung mit einer Identität des Zielservers (110, 114) übereinstimmt.

11. Verfahren (400, 500) nach Anspruch 10, wobei die Sicherheitsverwaltungsdaten (86) ferner zusätzliche Einstellungen umfassen, so dass der Richtlinienserver (78) konfiguriert ist, die zusätzlichen Einstellungen zu berücksichtigen beim Bestimmen, ob die Autorisierungsanforderung bestätigt oder abgelehnt wird.

12. Verfahren (400, 500) nach Anspruch 11, wobei die zusätzlichen Einstellungen private Einstellungen bezüglich der elektronischen Einrichtung oder Subskribenten umfassen; und/oder
wobei die zusätzlichen Einstellungen Einstellungen umfassen, die von wenigstens einem Übertragungsmedium oder Diensteanbieter, der Netzwerkzugriff auf die elektronische Einrichtung (54) und den Zielserver (110, 114) bereitstellt, vorgenommen wurden.

## Revendications

1. Système de gestion de la sécurité (50), comprenant :
un serveur de point d'inspection et un serveur de politiques connecté par l'intermédiaire d'un réseau, chacun dudit serveur de point d'inspection et dudit serveur de politiques pour être connecté à un dispositif électronique (54) par l'intermédiaire dudit réseau ;
ledit serveur de point d'inspection (102) étant configuré de manière à recevoir, en provenance dudit dispositif électronique, une demande (505) pour envoyer des données contextuelles relatives à l'identité d'un abonné (S, S') à un serveur de destination (110, 114) ;
ledit serveur de point d'inspection (102) étant configuré, en réponse à la réception de ladite demande, de manière à transmettre une demande d'autorisation (405) audit serveur de politiques (78), ladite demande d'autorisation (405) comprenant une demande d'approbation concernant l'envoi desdites données contextuelles dudit dispositif électronique (54) audit serveur de destination (110, 114) ;
ledit serveur de politiques (78) étant configuré de manière à recevoir (405) ladite demande d'autorisation (405), à accéder à des données de gestion de la sécurité (86), et à déterminer s'il convient d'approuver ou de refuser ladite demande d'autorisation (405) sur la base d'une comparaison de ladite demande d'autorisation (405) et desdites données de gestion de la sécurité (86) ;
ledit serveur de politiques (78) étant configuré de manière à envoyer une réponse (420, 425) audit serveur de point d'inspection, indiquant si ladite demande d'autorisation (405) est acceptée ou refusée ;
ledit serveur de point d'inspection (102) étant configuré de manière à recevoir ladite réponse à ladite demande d'autorisation (405), à envoyer (525) lesdites données contextuelles si ladite réponse indique une approbation, et à empêcher la remise (520) desdites données contextuelles si ladite réponse indique un refus.

2. Système (50) selon la revendication 1, dans lequel lesdites données contextuelles incluent des données de localisation, un état d'appel, ou un état de session, ou des informations relatives à l'identité d'au moins un abonné (S, S'), et/ou des données de profil.

3. Système (50) selon la revendication 2, dans lequel les informations relatives à l'identité d'un abonné donné (S, S') incluent des préférences de l'abonné, des informations d'identification, des informations de facturation et des informations de compte.

4. Système (50) selon la revendication 1, dans lequel les données de gestion de la sécurité (86) comprenant une identification dudit dispositif électronique (54) et une identification de serveur de destination de sorte que ladite demande d'autorisation est approuvée si ladite identification de serveur de destination correspond à une identité dudit serveur de destination (110, 114).

5. Système (50) selon la revendication 4, dans lequel lesdites données de gestion de la sécurité (86) comprenant en outre des paramètres supplémentaires de sorte que ledit serveur de politiques (78) est configuré de manière à prendre en compte lesdits paramètres supplémentaires lorsqu'il est déterminé s'il convient d'approuver ladite demande d'autorisation.

6. Système (50) selon la revendication 5, dans lequel lesdits paramètres supplémentaires comprenant des paramètres de confidentialité respectifs connexes audit dispositif électronique ou audit abonné ; et/ou
dans lequel lesdits paramètres supplémentaires comprenant des paramètres établis par au moins l'un parmi un opérateur ou un fournisseur de services qui fournit un accès réseau audit dispositif électronique (54), et audit serveur de destination (110, 114).

7. Procédé (400, 500) de gestion de la sécurité comprenant:
- recevoir (505), au niveau d'un serveur de point d'inspection (102), en provenance d'un dispositif électronique (54) pouvant être connecté au serveur de point d'inspection (102), une demande pour remettre des données contextuelles relatives à l'identité d'un abonné (S, S') à un serveur de destination (110, 114) ;
- transmettre une demande d'autorisation (405) dudit serveur de point d'inspection (102) à un serveur de politiques (78), ladite demande d'autorisation (405) comprenant une demande d'approbation concernant l'envoi desdites données contextuelles dudit dispositif électronique (54) audit serveur de destination (110 , 114) ;
- recevoir (405), au niveau dudit serveur de politiques (78), ladite demande d'autorisation ;
- accéder (410) à des données de gestion de la sécurité (86), au niveau dudit serveur de politiques (78) ;
- déterminer (415) s'il convient d'approuver ou de refuser ladite demande d'autorisation (405) sur la base d'une comparaison de ladite demande d'autorisation (405) et desdites données de gestion de la sécurité ;
- envoyer (420, 425) une réponse audit serveur de point d'inspection (102), indiquant si ladite demande d'autorisation (405) est acceptée ou refusée ; et
- recevoir ladite réponse à ladite demande d'autorisation (405), au niveau dudit serveur de point d'inspection (102), envoyer lesdites données contextuelles (525) si ladite réponse indique une approbation, et empêcher la remise desdites données contextuelles (520) si ladite réponse indique un refus.

8. Procédé (400, 500) selon la revendication 7, dans lequel lesdites données contextuelles incluent des données de localisation, un état d'appel, ou un état de session, ou des informations relatives à l'identité d'au moins un abonné (S, S'), et/ou des données de profil.

9. Procédé (400, 500) selon la revendication 8, dans lequel les informations relatives à l'identité d'un abonné donné (S, S') incluent des préférences de l'abonné, des informations d'identification, des informations de facturation et des informations de compte.

10. Procédé (400, 500) selon la revendication 7, dans lequel les données de gestion de la sécurité (86) comprenant une identification dudit dispositif électronique (54) ou dudit abonné (S, S') et une identification de serveur de destination de sorte que ladite demande d'autorisation est approuvée si ladite identification de serveur de destination correspond à une identité dudit serveur de destination (110, 114).

11. Procédé (400, 500) selon la revendication 10, dans lequel lesdites données de gestion de la sécurité (86) comprenant en outre des paramètres supplémentaires de sorte que ledit serveur de politiques (78) est configuré de manière à prendre en compte lesdits paramètres supplémentaires lorsqu'il est déterminé s'il convient d'approuver ou de refuser ladite demande d'autorisation.

12. Procédé (400, 500) selon la revendication 11, dans lequel lesdits paramètres supplémentaires comprenant des paramètres de confidentialité respectifs connexes audit dispositif électronique ou audit abonné ; et/ou dans lequel lesdits paramètres supplémentaires comprenant des paramètres établis par au moins l'un parmi un opérateur ou un fournisseur de services qui fournit un accès réseau audit dispositif électronique (54), et audit serveur de destination (110, 114).
